# EUROPÄISCHE PATENTANMELDUNG

(11) **EP 3 965 528 A1**
(43) Veröffentlichungstag der Anmeldung: **09.03.2022**
(21) Anmeldenummer: 21195326.0
(22) Anmeldetag: 07.09.2021
(51) Int. Cl.: H05B 1/02, H05B 3/42, B29C 64/209

(54) **DRUCKKOPF FÜR EINEN 3D-DRUCKER**

(30) Priorität: 08.09.2020 DE 102020123383
(71) Anmelder: Eichenauer Heizelemente GmbH & Co. KG, 76870 Kandel (DE)
(72) Erfinder: Schlachter, Ulrich, 76863 Herxheim (DE); Leininger, Philippe, 67500 Haguenau (DE)
(74) Vertreter: Twelmeier Mommer & Partner

(57) **Zusammenfassung**

Beschrieben wird ein Druckkopf für einen 3D-Drucker, mit einer Düse (1) zum Abgeben von aufgeschmolzenem Kunststoffmaterial, einem an die Düse (1) angeschlossenen Rohr (3), und einem elektrischen Heizelement zum Aufschmelzen von Kunststoffmaterial. Erfindungsgemäß ist vorgesehen, dass das Heizelement als Heizschicht (4, 4a, 4b) auf das Rohr (3) -direkt oder auf eine Zwischenschicht- durch Aufsprühen, Aufdrucken oder Abscheidung aus der Gasphase aufgebracht ist.

## Beschreibung

Die Erfindung betrifft einen Druckkopf für einen 3D-Drucker. Ein Druckkopf mit den im Oberbegriff des Anspruchs 1 angegebenen Merkmalen ist aus WO 2019/175383 A1 sowie EP 3 231 581 B1 bekannt.

3D-Drucker ermöglichen eine schnelle und einfache Herstellung von Prototypen oder Vorserienvisualisierungsmodellen. Derzeit sind verschiedene 3D-Druckverfahren gebräuchlich. Die vorliegende Erfindung betrifft einen Druckkopf für einen 3D-Drucker, mit dem aufgeschmolzener Kunststoff schichtweise aufgetragen und so ein dreidimensionaler Gegenstand erzeugt wird.

Die aus WO 2019/175383 A1 sowie EP 3 231 581 B1 bekannten Druckköpfe sind als Monoblock ausgebildet, der eine oder mehrere Düsen aufweist und mit einer Heizpatrone in einer dafür vorgesehenen Kammer beheizt wird, um Kunststoffmaterial in dem Monoblock aufzuschmelzen.

Ständiges Ziel bei der Entwicklung von Druckköpfen für 3D-Drucker ist, eine möglichst hohe Präzision beim Drucken von dreidimensionalen Gegenständen zu ermöglichen, d.h. Gegenstände mit möglichst geringen Fertigungstoleranzen drucken zu können, und dreidimensionale Gegenstände möglichst schnell drucken zu können.

Aufgabe der vorliegenden Erfindung ist es, einen Weg aufzuzeigen, wie mit einem Druckkopf für 3D-Drucker dreidimensionale Gegenstände kostengünstig schneller und mit einer höheren Präzision gedruckt werden können.

Diese Aufgabe wird durch einen Druckkopf mit den im Anspruch 1 angegebenen Merkmalen gelöst. Vorteilhafte Weiterbildungen der Erfindung sind Gegenstand von Unteransprüchen.

Bei einem erfindungsgemäßen Druckkopf ist eine Heizschicht auf einem Rohr angeordnet, das zu einer Düse führt. Hierbei kann das Rohr auch einstückig mit der Düse ausgeführt sein. Die Heizschicht kann auf das Rohr -direkt oder auf eine Zwischenschicht- durch Aufsprühen, Aufdrucken oder Abscheidung aus der Gasphase aufgebracht werden. Ein Rohr, insbesondere ein zylindrisches Rohr, mit einer solchen Heizschicht hat eine vorteilhaft geringe Wärmekapazität, so dass Kunststoff in dem Rohr sehr schnell aufgeschmolzen werden und mit dem Drucken begonnen werden kann. Vorteilhaft kann somit ein dreidimensionaler Gegenstand in kürzerer Zeit gedruckt werden. Die im Vergleich zu den aus WO 2019/175383 A1 sowie EP 3 231 581 B1 bekannten Druckköpfen reduzierte Wärmekapazität des Druckkopfes ermöglicht zudem auch ein rascheres Abkühlen desselben, was am Ende eines Druckvorgangs oder bei Unterbrechung eines Druckvorgangs zu einem geringeren Nachtropfen von flüssigem Kunststoff aus der Düse führt. Geringeres Nachtropfen ermöglicht eine höhere Präzision beim Drucken.

Derzeitige Druckkopfausführungen weisen oftmals stromaufwärts des Heizelementes Kühlmittel wie Kühlrippen oder Kühlkanäle auf, die verhindern sollen, dass die vom Heizelement abgegebene Wärme in den Bereich oberhalb des Heizelementes gelangt und dort schon den Kunststoff erweicht. Durch den Einsatz eines erfindungsgemäßen Druckkopfes kann die Wärmeentwicklung jedoch besser auf den eigentlichen Heizbereich begrenzt werden und es kann oftmals vorteilhaft auf Kühlmittel verzichtet werden.

Das Rohr kann beispielsweise ein Keramikrohr sein, etwa auf Basis von Aluminiumoxid, oder ein Metallrohr, etwa aus Stahl, Edelstahl, Aluminium oder Kupfer. Auf ein Rohr aus einem elektrischen Isolator, beispielsweise ein Keramikrohr, kann die Heizschicht direkt aufgetragen werden, etwa durch Aufsprühen oder Aufdrucken. Bei einem Metallrohr kann die Heizschicht auf eine elektrisch isolierende Zwischenschicht aufgebracht sein. Eine Zwischenschicht kann auch zur Verbesserung der Haftung der Heizschicht auf einem Keramikrohr vorgesehen sein.

Die Heizschicht kann aufgedruckt oder aufgesprüht sein. Heizschichten, die zunächst flüssig oder als Paste aufgebracht und dann durch Temperatureinwirkung verfestigt werden, werden oft als Dickschichtwiderstände bezeichnet. Derartige Heizschichten können beispielsweise auf Basis von Rutheniumdioxid, Ag/Pd, Graphit, Carbon-Nanotubes, oder anderer leitfähiger Materialienhergestellt sein.

Eine andere Möglichkeit besteht darin, die Heizschicht aus der Gasphase abzuscheiden, beispielsweise mittels Kathodenzerstäubung. Derartige Heizschichten werden oft als Dünnschichtwiderstände bezeichnet und können beispielsweise auf Basis von Nickel und/oder Chrom hergestellt sein.

Eine vorteilhafte Weiterbildung der Erfindung sieht vor, dass das Rohr verschiedene Heizschichten aufweist, die in Längsrichtung des Rohres bevorzugt hintereinander angeordnet sind und die unabhängig voneinander angesteuert werden können. Auf diese Weise kann das Rohr mehrere Heizzonen aufweisen. Beispielsweise kann in einer ersten Zone als Vorheizzone das Kunststoffmaterial vorgewärmt werden, so dass es in einer späteren Zone leichter und schneller aufgeschmolzen werden kann. Die einzelnen Heizschichten können jeweils einen eigenen Potentialanschluss haben, so dass an jede Heizzone unabhängig von anderen Heizzonen eine Spannung angelegt werden kann, so dass durch die betreffende Heizschicht ein Heizstrom fließt.

Denkbar ist es jedoch auch, verschiedene Heizzonen lediglich durch unterschiedliche Heizschichten zu konfigurieren, wobei sich die Heizschichten sowohl im Material als auch im Layout unterscheiden können. Hierbei kann dann aber die Leistungsaufteilung meist nicht verändert werden, es sei denn, sie ist temperaturabhängig.

Alternativ kann der Widerstand der Heizschicht selbst temperaturabhängig sein, also einen positiven oder negativen Temperaturkoeffizienten aufweisen. Bei einem positiven Temperaturkoeffizienten z.B. lässt sich so erreichen, dass auch bei einer gleichmäßigen Heizschicht der noch kühlere Kunststoff im stromaufwärtigen oberen Rohrbereich stärker erwärmt wird als der schon aufgeheizte Kunststoff im stromabwärtigen unteren Rohrbereich.

Die Heizschicht kann als gewundene Heizbahnen ausgebildet sein, beispielsweise mäanderförmig. Eine andere Möglichkeit, besteht darin, die Heizschicht flächig auszubilden, beispielsweise als (Teil-)Zylinderfläche, also einen Abschnitt des Rohres mit der Heizschicht zu überziehen, so dass der Heizstrom dann in Längsrichtung des Rohres fließt. Alternativ kann die Heizschicht auch einen in Längsrichtung des Rohres verlaufenden Streifen aussparen, so dass der Heizstrom in Umfangsrichtung des Rohres fließt.

Eine weitere vorteilhafte Weiterbildung der Erfindung sieht vor, dass die Heizschicht oder die Heizschichten über Kontaktbahnen elektrisch kontaktiert werden. Indem eine Heizschicht mit einer Kontaktbahn überlappend angeordnet wird, lässt sich eine gute elektrische Kontaktierung der Heizschicht erreichen. Die Kontaktbahn kann beispielsweise über Federkontakte, etwa federbelastete Stifte, oder durch eine Lötverbindung elektrisch kontaktiert werden. Die Kontaktierung der Heizschichte(n) kann beispielsweise durch einen Metallring unterstützt werden, insbesondere einen offenen Metallring, der auf die Kontaktbahn gelötet ist. Gut geeignet sind Kupferbasislegierungen, beispielsweise Bronze- oder Messinglegierungen wie CuSn6. Ein Metallring kann auch direkt mit der Heizschicht verlötet werden oder der Metallring auf das Rohr aufgesteckt und danach die Heizschicht so aufgebracht werden, dass sie auch den Metallring bedeckt und so elektrisch gut kontaktiert.

Bevorzugt weist der Druckkopf mindestens einen Temperatursensor auf, mit dessen Hilfe sich die Temperatur des zu erwärmenden Kunststoffes über die Temperatur am Rohr ermitteln lässt. Der Temperatursensor kann beispielsweise an dem Rohr anliegen, beispielsweise als mit ein dem Rohr verbundener Messwiderstand, etwa ein NTC-Sensor oder einer NTC-Sensorpaste. Vorteilhaft kontaktiert der Sensor dabei das Rohr neben der Heizschicht. Denkbar ist jedoch auch eine kontaktlose Temperaturmessung, z.B. über einen Infrarotsensor, oder eine Temperaturermittlung durch Auswertung des elektrischen Widerstands der Heizschicht(en). Möglich ist es auch, die Temperatur des Kunststoffs direkt zu messen, in dem ein Temperatursensor oder dessen elektrische Kontakte durch eine abgedichtete Bohrung der Rohrwand hindurch geführt sind. Im Gegensatz zum Stand der Technik, bei der die Temperaturmessung über den Heizblock erfolgt, kann so die Temperatur des Kunststoffes sehr genau bestimmt werden.

Eine weitere vorteilhafte Weiterbildung der Erfindung sieht vor, dass an die Heizschichte(n) eine Steuerschaltung angeschlossen ist, beispielsweise zur Temperaturregelung. Wenn das Rohr ein Metallrohr ist, kann die Steuerschaltung zusätzlich zu einem mit der Heizschicht verbundenen Potenzialanschluss und einem mit der Heizschicht verbundenen Masseanschluss auch einen mit dem Metallrohr verbundenen Messanschluss aufweisen. Auf diese Weise kann die Steuerschaltung für Diagnosezwecke einen temperaturabhängigen Fehlerstrom messen, der von der Heizschicht zu dem Metallrohr fließt.

Eine weitere vorteilhafte Weiterbildung der Erfindung sieht vor, dass das Rohr zumindest teilweise von einem Kunststoffgehäuse umgeben ist. Auf diese Weise kann die Heizschicht vor Umwelteinflüssen geschützt werden. Zudem kann durch das Kunststoffgehäuse eine Wärmeisolation bewirkt werden, so dass die von der Heizschicht erzeugte Wärme zu einem größeren Teil nach innen an Kunststoff im Inneren des Rohres abgegeben wird und weniger Wärme verloren geht. Das Kunststoffgehäuse kann beispielsweise zwei Halbschalen aufweisen, die beispielsweise durch Schrauben miteinander verbunden sind. Denkbar ist aber auch, dass das Gehäuse aus verschiedenen Materialien, z.B einer Kunststoffhalbschale und einer Metallhalbschale gefertigt ist. Alternativ, kann eine temperaturfeste Lackschicht mit einem hohen Reflektionskoeffizient aufgebracht werden.

Weitere Einzelheiten und Vorteile der Erfindung werden an Ausführungsbeispielen der Erfindung unter Bezugnahme auf die beigefügten Zeichnungen erläutert. Gleiche und einander entsprechende Komponenten sind darin mit übereinstimmenden Bezugszahlen versehen. Es zeigen:
- Fig.1: ein Ausführungsbeispiel eines erfindungsgemäßen Druckkopfs;
- Fig. 2: eine Schnittansicht zu Fig. 1;
- Fig. 3: das Rohr des Druckkopfs mit der Düse;
- Fig. 4: der Druckkopf ohne Kunststoffgehäuse; und
- Fig. 5: ein weiteres Ausführungsbeispiel eines erfindungsgemäßen Druckkopfs ohne Kunststoffgehäuse.

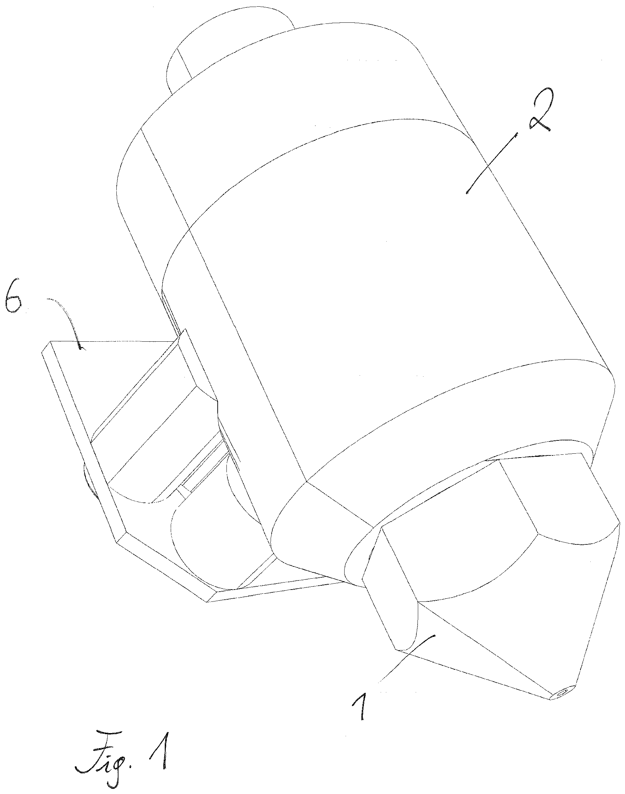

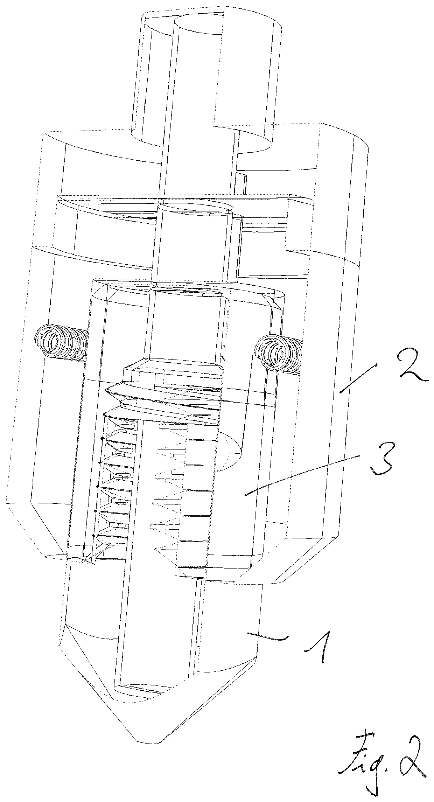

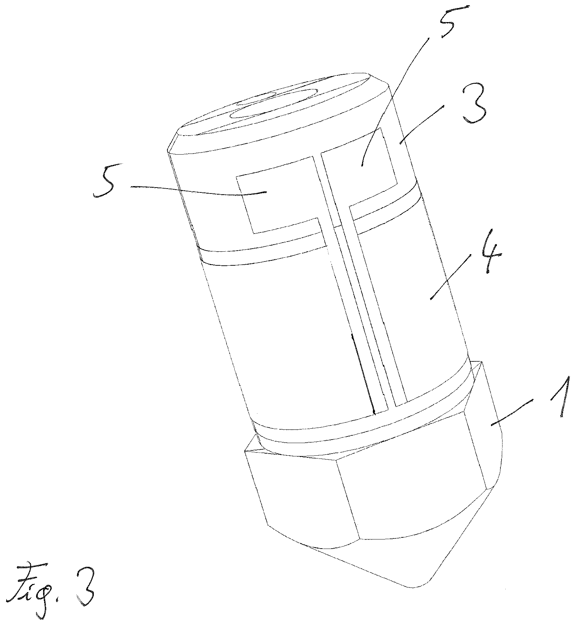

Der in den Fig. 1 und 2 dargestellte Druckkopf hat eine Düse 1 zum Abgeben von aufgeschmolzenem Kunststoffmaterial und ein Kunststoffgehäuse 2, das ein Rohr 3 umgibt und eine Leiterplatte 6 mit einer Steuerschaltung trägt. Das Rohr 3 kann beispielsweise ein zylindrisches Rohr 3 sein, also eine kreiszylindrische Außenfläche haben. Das Rohr 3 ist an die Düse 1 angeschlossen, beispielsweise verschraubt und kann dazu ein Innengewinde aufweisen. Das in Fig. 3 zusammen mit der Düse 1 dargestellte Rohr 3 trägt ein elektrisches Heizelement in Form einer Heizschicht 4, um Kunststoffmaterial in der Düse 1 aufzuschmelzen. Alternativ kann das Rohr aber auch einstückig mit der Düse ausgeführt sein.

Die Heizschicht 4 kann eine aufgedruckte oder aufgesprühte Schicht sein, beispielsweise ein Dickschichtwiderstand, oder beispielsweise eine aus der Gasphase abgeschiedene Schicht, beispielsweise ein Dünnschichtwiderstand. Das Rohr 3 kann aus elektrisch isolierendem Material sein, beispielsweise aus Keramik, oder aus Metall. Wenn das Rohr 3 ein Metallrohr ist, liegt die Heizschicht 4 auf einer elektrisch isolierenden Zwischenschicht. Wenn das Rohr aus einem elektrisch isolierenden Material ist, beispielsweise Keramik, kann die Heizschicht direkt auf dem Rohr oder auf einer elektrisch isolierenden Zwischenschicht abgeschieden sein, die beispielsweise zur Verbesserung der Haftung dienen kann.

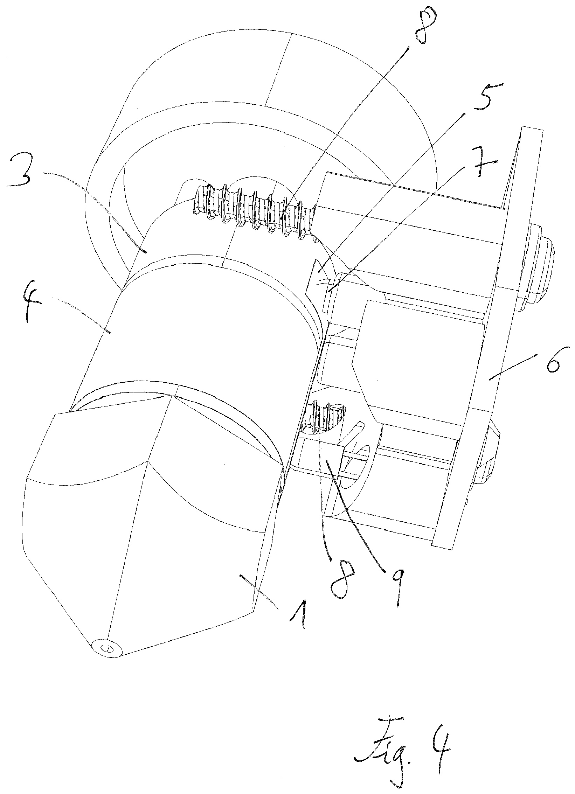

In Fig. 4 ist der Druckkopf ohne das Kunststoffgehäuse 2 dargestellt. Die Heizschicht 4 ist an die Steuerschaltung über Kontaktschichten 5 mit Kontaktfelder und Kontaktbahnen sowie Federkontakte 7 an die Steuerschaltung angeschlossen. Die Federkontakte 7 können beispielsweise als Federstifte ausgebildet sein, die auf die Kontaktfelder 5 drücken.

Bei dem gezeigten Ausführungsbeispiel fließt der Heizstrom in Umfangrichtung des Rohres. Alternativ kann der Heizstrom auch in Längsrichtung des Rohres fließen. Anstelle von Kontaktfeldern kann die Heizschicht dann beispielsweise auch über Metallringe kontaktiert werden, beispielsweise aus Kupferbasis, etwa aus Messing oder Bronze. Diese Metallringe können auf das Rohr 3 aufgeschoben oder -im Fall von offenen Ringen- auch aufgeclipst sein und bevorzugt mit der Kontaktbahn verlötet sein.

Das Gehäuse 2 kann beispielsweise Kunststoffhalbschalen aufweisen, die durch Schrauben 8 zusammengehalten werden. Die Schrauben 8 können auch der Befestigung der Leiterplatte 6 an dem Kunststoffgehäuse 2 dienen.

Die Steuerschaltung kann an wenigstens einen Temperatursensor 9 angeschlossenen sein, der die Temperatur des Rohrs 3 misst oder von in dem Rohr 3 enthaltenen Kunststoff ermittelt. Auf diese Weise kann die Temperatur sehr genau auf einen Sollwert geregelt werden.

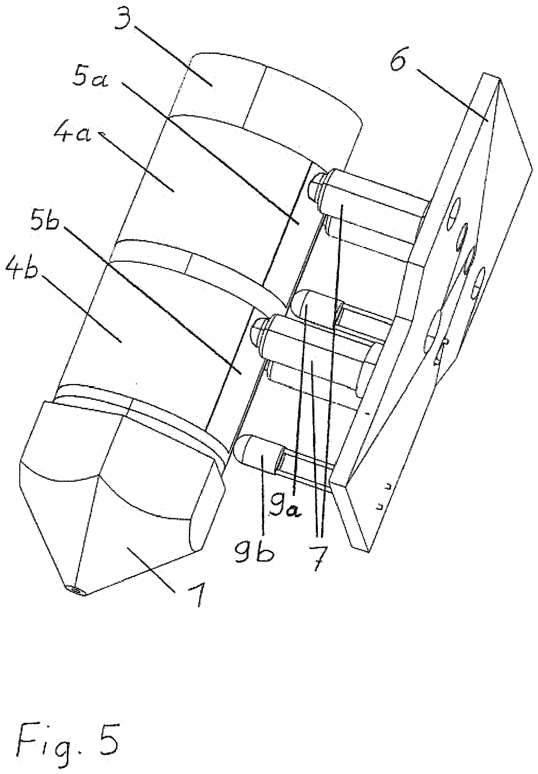

In Fig. 5 ist ein weiteres Ausführungsbeispiel eines Druckkopfes gezeigt, das der Einfachheit halber ohne sein Kunststoffgehäuse 2 dargestellt ist. Dieses Ausführungsbeispiel unterscheidet sich von dem Ausführungsbeispiel der Figuren 1 bis 4 im Wesentlichen nur dadurch, dass das Rohr 3 mehrere Heizschichten 4a, 4b und zugehörigen Kontaktschichten 5a, 5b nebeneinander aufweist und somit mehrere unabhängige Heizzonen ausgebildet sind. Diese Heizschichten 4a, 4b sind in Längsrichtung des Rohres 3 hintereinander angeordnet und über Kontaktschichten 5a, 5b mit Anschlüssen, beispielswiese Federkontakten 7 versehen, über die sie unabhängig voneinander angesteuert werden können. Bei dem Ausführungsbeispiel der Fig. 5 können somit verschiedene Abschnitte des Rohres 3 unabhängig voneinander beheizt und folglich auf unterschiedlichen Temperaturen gehalten werden. Dazu kann jeder Heizschicht 4a, 4b mit ihrer Heizzone ein Temperatursensor 9a, 9b zugeordnet sein. Beispielsweise kann Kunststoffmaterial in einem an die Düse 1 angrenzenden Abschnitt in einer ersten Heizzone auf eine höhere Temperatur erwärmt werden, die für die Abgabe von Kunststoffmaterial zum Drucken optimal ist, und in einem von der Düse 1 abgewandten Abschnitt des Rohres 3 in einer zweiten Heizzone auf eine etwas geringeren Temperatur vorgewärmt werden, so dass es in der Nähe der Düse 1 dann rasch aufgeschmolzen werden kann.

### Bezugszeichenliste

- 1: Düse
- 2: Kunststoffgehäuse
- 3: Rohr
- 4: Heizschicht
- 4a: Heizschicht
- 4b: Heizschicht
- 5, 5a, 5b: Kontaktschicht mit Kontaktfeld
- 6: Leiterplatte
- 7: Federkontakt
- 8: Schraube
- 9, 9a, 9b: Temperatursensor

## Patentansprüche

1. Druckkopf für einen 3D-Drucker, mit
einer Düse (1) zum Abgeben von aufgeschmolzenem Kunststoffmaterial,
einem an die Düse (1) angeschlossenen Rohr (3), und
einem elektrischen Heizelement zum Aufschmelzen von Kunststoffmaterial, **dadurch gekennzeichnet, dass**
das Heizelement als Heizschicht (4, 4a, 4b) auf das Rohr (3) -direkt oder auf eine Zwischenschicht- durch Aufsprühen, Aufdrucken oder Abscheidung aus der Gasphase aufgebracht ist.

2. Druckkopf nach Anspruch 1, **dadurch gekennzeichnet, dass** das Rohr (3) ein Innengewinde aufweist, das mit der Düse (1) verschraubt ist.

3. Druckkopf nach Anspruch 1, **dadurch gekennzeichnet, dass** das Rohr (3) einstückig mit der Düse (1) ausgebildet ist.

4. Druckkopf nach einem der vorstehenden Ansprüche, **gekennzeichnet durch** einen Temperatursensor (9, 9a, 9b) zur Messung der Temperatur des Rohres (3) und/oder zur Ermittlung der Temperatur vom Kunststoff in dem Rohr (3).

5. Druckkopf nach einem der vorstehenden Ansprüche, **gekennzeichnet durch** eine Steuerschaltung, die an die Heizschicht (4) angeschlossen ist.

6. Druckkopf nach Anspruch 5, **dadurch gekennzeichnet, dass** das Rohr (3) ein Metallrohr ist und die Steuerschaltung zusätzlich zu einem mit der Heizschicht (4, 4a, 4b) verbundenen Potenzialanschluss und einem mit der Heizschicht (4, 4a, 4b) verbundenen Masseanschluss auch einen mit dem Rohr (3) verbundenen Messanschluss zum Messen eines Fehlerstroms aufweist.

7. Druckkopf nach einem der vorstehenden Ansprüche, **dadurch gekennzeichnet, dass** die Heizschicht (4, 4a, 4b) über eine Kontaktschicht (5, 5a, 5b) an die Steuerschaltung angeschlossen ist.

8. Druckkopf nach Anspruch 7, **dadurch gekennzeichnet, dass** die Heizschicht mittels Federkontakten (7) an die Steuerschaltung angeschlossen ist.

9. Druckkopf nach Anspruch 7 oder 8, **dadurch gekennzeichnet, dass** auf die Kontaktschicht (5, 5a, 5b) ein Metallkörper, vorzugsweise ein Metallring aufgelötet ist.

10. Druckkopf nach einem der vorstehenden Ansprüche, **dadurch gekennzeichnet, dass** das Rohr (3) wenigstens teilweise von einem Kunststoffgehäuse (2) umgeben ist.

11. Druckkopf nach einem der vorstehenden Ansprüche, **dadurch gekennzeichnet, dass** das Rohr (3) ein Keramikrohr ist.

12. Druckkopf nach einem der vorstehenden Ansprüche, **dadurch gekennzeichnet, dass** das Rohr (3) mehrere Heizschichten (4a, 4b) aufweist, die in Längsrichtung des Rohres (3) hintereinander angeordnet sind und mit Anschlüsse versehen sind, über die sie unabhängig voneinander angesteuert werden können.
